# EUROPÄISCHE PATENTSCHRIFT

(11) **EP 1 364 745 B1**
(45) Veröffentlichungstag und Bekanntmachung des Hinweises auf die Patenterteilung: **29.11.2006**
(21) Anmeldenummer: 03009405.6
(22) Anmeldetag: 25.04.2003
(51) Int. Cl.: B23Q 11/10, F16N 7/32, B05B 7/04

(54) **Minimalmengen-Kühlschmiervorrichtung**
Device for applying minimal amounts of coolant/lubricant
Dispositif pour refroidissement/lubrification minimale

(30) Priorität: 23.05.2002 DE 10222863
(43) Veröffentlichungstag der Anmeldung: 26.11.2003
(73) Patentinhaber: Link, Edmar, D-76228 Karlsruhe (DE)
(72) Erfinder: Link, Edmar, D-76228 Karlsruhe (DE)
(74) Vertreter: Liesegang, Eva

(56) Entgegenhaltungen:
- EP-A- 0 535 271
- DE-A1- 19 608 485
- DE-C1- 3 743 968

## Beschreibung

Die Erfindung betrifft eine Minimalmengen-Kühlschmiervorrichtung mit den Merkmalen des Oberbegriffs des Anspruchs 1. Eine solche Vorrichtung ist aus der DE 37 43 968 C1 und mit einer Ausführung der Flüssigkeitszuleitung als Kapillarschlauch aus der EP 0 535 271 bekannt.

Mit einer solchen Minimalmengen-Kühlschmiervorrichtung lassen sich kleinste Mengen an Kühlschmiermittel im Bereich von wenigen ml/h gezielt an den Schmierort bringen, was teures Kühlschmiermittel spart und in der Regel eine gesundheitsschädigende Bildung und Ausbreitung von Kühlschmiernebel in der Umgebung verhindert. Bei der bekannten Konstruktion sind die Mischkammer und der in Strömungsrichtung davor befindliche Luftraum nicht gegeneinander abgedichtet. Unter bestimmten Betriebsbedingungen kann es zu einem Rückstrom in den Luftraum kommen, beispielsweise bei nicht fachgerechter Einstellung des Mischungsverhältnisses zwischen Kühlschmierflüssigkeit und Druckluft. Unter diesen Umständen kommt es dann zu der die Kühlschmierwirkung beeinträchtigenden, gesundheitsschädigenden Vernebelung von Kühlschmierflüssigkeit.

Der Erfindung liegt die Aufgabe zugrunde, eine Minimalmengen-Kühlschmiervorrichtung der eingangs genannten Art zu schaffen, bei der eine Vernebelung von Kühlschmierflüssigkeit in die Umgebung unter allen Betriebsbedienungen zuverlässig vermieden wird.

Zur Lösung dieser Aufgabe dient Patentanspruch 1.

Vorteilhafte Ausgestaltungen der Erfindung sind in den Unteransprüchen angegeben. Dabei ist eine Ausführung der Erfindung mit besonders guter Mischwirkung zwischen den unter Druck stehenden Gas- und Flüssigkeitsströmen unter Aufspaltung der Kühlschmierflüssigkeit in feinste Tröpfchen mit einem in Strömungsrichtung vor der Mischkammer angeordneten Drallerzeuger gemäß DE 196 08 485 C2 von besonderem Vorteil, wie sie in Anspruch 9 unter Schutz gestellt ist.

Bei einer alternativen Lösung ohne einen solchen Drallerzeuger ist gemäß Patentanspruch 8 eine konstruktive Lösung vorgesehen, mit der ein innerer zweiter Luftmantel gebildet wird, so daß das austretende Flüssigkeitsgemisch zuerst von diesem zweiten Luftmantel gebündelt wird, und der so gebündelte Strahl von dem ersten, radial außerhalb des Düsenkörpers geführten Luftmantel des Luftmantelerzeugers eingefaßt wird. Es liegt auf der Hand, daß hierdurch eine besonders effektive Verhinderung einer Vernebelung von Kühlschmierflüssigkeit in die Umgebung gegeben ist.

Die Erfindung ist im folgenden anhand schematischer Zeichnungen an Ausführungsbeispielen mit weiteren Einzelheiten näher erläutert. Es zeigen:
- Figur 1: einen Axialschnitt durch eine erste Ausführung der Erfindung;
- Figur 2: eine Ansicht der ersten Ausführung in Richtung des Pfeiles II in Figur 1
- Figur 3: einen Axialschnitt durch eine zweite Ausführung der Erfindung;
- Figur 4: eine Ansicht in Richtung des Pfeiles III in Figur 3;
- Figuren 5 - 11: Ansichten unterschiedlicher Ausführungen eines bei der Erfindung einsetzbaren Luftmantelerzeugers, wobei die Figur 11 die konkrete Ansicht des Luftmantelerzeugers nach Figur 1 in Richtung des Pfeiles XI darstellt;
- Figuren 12, 13: Axialschnitte in um 90° verdrehter Lage eines Düseneinsatzes, wie er bei der Ausführung nach Figur 3 verwendet ist; und
- Figur 14: eine Ansicht in Richtung des Pfeiles XIV in Figur 12.

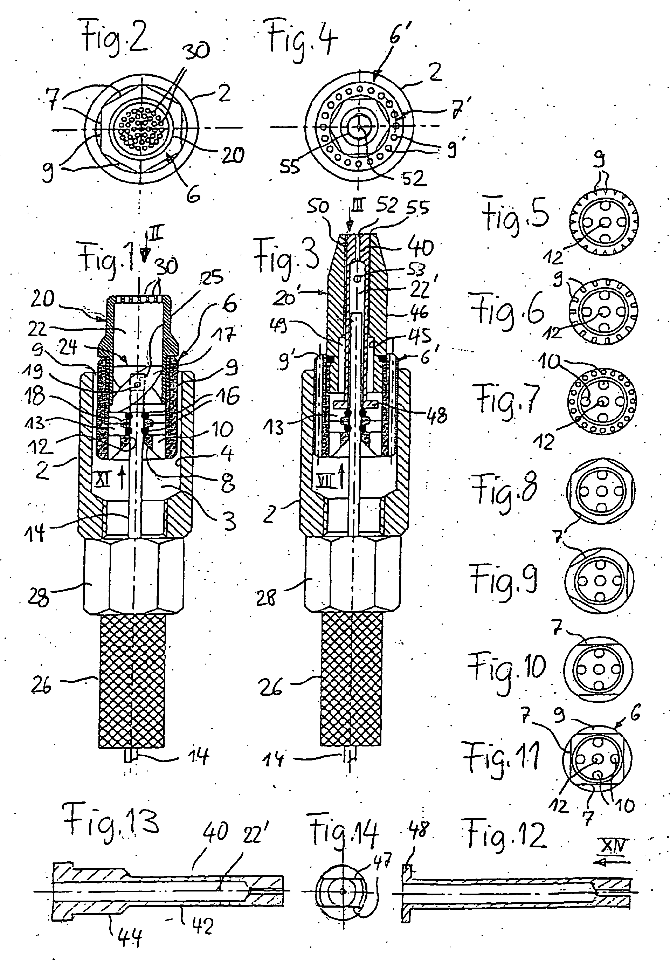

Die in den Figuren 1 und 2 gezeigte erste Ausführung einer erfindungsgemäßen Minimalmengen-Kühlschmiervorrichtung hat einen Träger 2 mit einer Senkbohrung 4, in die ein Luftmantelerzeuger 6 in Form einer Hülse eingepreßt ist.

Das innere Ende der Hülse 6 hat einen Steg 8 mit vier gleichmäßig um den Umfang verteilten Durchgangsbohrungen 10 für Druckluft und einer zentralen Durchgangsbohrung 12 für einen Kapillarschlauch 14 zur Zuführung von Kühlschmierflüssigkeit. Der Kapillarschlauch hat vorzugsweise einen Innendurchmesser im Bereich von 0,2 mm bis 1 mm. Auf den Kapillarschlauch ist eine Dichtungspackung aufgeschoben, die aus zwei O-Ringen 16 mit gleichem, auf den Außenumfang des Kapillarschlauches 14 passenden Innendurchmesser und einer axial dazwischen angeordneten ringförmigen Scheibe 18 aus Metall oder hartem Kunststoff besteht. Die Dichtungspackung ist axial schwimmend auf den Kunststoffschlauch aufgeschoben.

In das äußere Ende des Luftmantelerzeugers 6 ist ein Düsenkopf 20 eingeschraubt. Der Düsenkopf hat in seinem vorderen Ende eine Mischkammer 22 zum Mischen von Kühlschmierflüssigkeit mit Druckluft. Druckluft und Kühlschmierflüssigkeit werden über einen Drallerzeuger 24 in die Mischkammer 22 eingeführt, der in das innere Ende des hohlen Düsenkopfes 20 eingepreßt ist. Der Drallerzeuger 24 ist, wie prinzipiell in der DE 196 08 485 C2 beschrieben, mit Drallflächen 17 auf seinem äußeren Umfang und mit einem Sackloch 25 zur Aufnahme des freien Endes des Kapillarschlauches 14 versehen. Über eine Querbohrung 19 gelangt aus dem Kapillarschlauch 14 austretende Kühlschmierflüssigkeit auf die Drallfläche 17.

Die Druckluft wird über einen Luftschlauch 26 zugeführt, der mittels einer Dichtverschraubung 28 mit dem Träger 2 verbunden ist. Innerhalb des Luftschlauches 26 ist der Kapillarschlauch 14 für die Zufuhr der Kühlschmierflüssigkeit geführt.

Der Düsenkopf 20 hat in seinem äußeren Ende eine Vielzahl von Ausströmöffnungen 30 für das in der Mischkammer 22 vorgemischte Luft-/Flüssigkeitsgemisch.

Wie am besten aus Figur 2 erkennbar ist, ist der Luftmantelerzeuger 6 an seinem äußeren Umfang mit über seine Länge durchgehenden Abflachungen 7 versehen, im vorliegenden Fall mit sechs Abflachungen 7, die eine äußere Sechskant-Kontur des Luftmantelerzeugers 6 ergeben. Zwischen diesen Abflachungen 7 und dem inneren Umfang der Senkbohrung 4 sind somit rings um den Umfang des Luftmantelerzeugers Luftspalte 9 gebildet.

Die Drücke der Druckluft und der Kühlschmierflüssigkeit werden bevorzugt in der Weise eingestellt, wie dies in der DE 37 43 968 C1 beschrieben ist, wobei der für Druckluftnetze übliche Betriebsdruck 6 bar zugrundegelegt ist.

Soll ein höherer Druck zur Zuführung der Kühlschmierflüssigkeit eingesetzt werden, kann dieser Druck bis in eine Größenordnung von 45 bar durch eine Kolbenpumpe erzeugt werden.

### Die Vorrichtung arbeitet wie folgt:

Durch Einschrauben des Düsenkopfes 20 in den Luftmantelerzeuger 6 wird die Dichtpackung 16, 18 auf den Kapillarschlauch 14 gegen den Steg 8 des Luftmantelerzeugers verspannt. Somit wird das Sackloch 25 für den Kapillarschlauch 14 sicher abgedichtet.

Druckluft gelangt aus einem Luftraum 3 im Träger 2 über die Bohrungen 10 in einen Luftraum 13 im Luftmantelerzeuger 6 und von dort über die Drallflächen 17 des Drallerzeugers 24 zusammen mit der Schmierflüssigkeit aus dem Kapillarschlauch 14 in die Mischkammer 22. Druckluft aus dem Luftraum 3 gelangt außerdem über die Luftspalte 9 nach außen, so daß sie den äußeren Umfang des Düsenkopfes 20 und anschließend das aus den Düsenöffnungen 30 ausströmende Luft-/Flüssigkeitsgemisch mit einem Luftmantel einhüllt. Dieser Luftmantel verhindert ein unerwünschtes Vernebeln des austretenden Luft-/Flüssigkeitsgemisches in die Umgebung.

Die Ausführung nach den Figuren 3 und 4, bei der für gleiche Teile gleiche Bezugszahlen verwendet sind, unterscheidet sich in folgender Hinsicht von der Ausführung nach den Figuren 1 und 2:

Der Luftmantelerzeuger 6 hat anstatt Abflachungen 7 einen Kranz 7' von Durchgangsbohrunden 9' auf einem Durchmesser, der größer als der Außendurchmesser des Umfangs des Düsenkopfes 20' ist. Dieser Düsenkopf 20' hat einen Düseneinsatz 40, der die Mischkammer 22' enthält. Der Düseneinsatz 40 ist detailliert in den Figuren 12 bis 14 dargestellt. Er hat einen rohrförmigen Schaftabschnitt 42, in den das freie Ende des Kapillarschlauches 14 hineinreicht und in dem die Mischkammer 22' gelegen ist. Am abströmseitigen Ende des Düseneinsatzes 40 ist eine Ausströmöffnung 52 vorgesehen. Am anderen Ende hat der Düseneinsatz 40 eine zylindrische Verdickung 44, über welche der Düseneinsatz in eine zylindrische Senkbohrung 45 eines Düsenmantels 46 eingepreßt ist. Der Düsenmantel 46 ist wie der Düsenkopf 20 nach Figur 1 mit seinem inneren Ende in den Luftmantelerzeuger eingeschraubt, wodurch ein Flansch 48 am inneren Ende des Düseneinsatzes 40 die Dichtungspackung 16, 18 gegen den Steg 8' des Luftmantelerzeugers 6' angedrückt wird, so daß eine zuverlässige Abdichtung zwischen dem Luftraum 13 im Luftmantelerzeuger 6' und der Mischkammer 22' erzielt ist.

Wie auch aus Figur 4 ersichtlich ist, sitzt der rohrförmige Schaftabschnitt 42 des Düseneinsatzes 40 mit Spiel 50 in der nicht bezeichneten Aufnahmebohrung im Düsenmantel 46. Durch dieses Spiel 50 strömende Druckluft tritt zu einem Teil über eine Querbohrung 53 in die Mischkammer 22' ein und strömt zum anderen Teil über ein Ringöffnung 55 aus dem Düsenmund aus.

Die Verdickung 44 des Düseneinsatzes 40 ist gegenüberliegend mit parallelen Abflachungen 47 versehen, wie aus der Figur 14 ersichtlich ist. Diese Abflachungen 47 erzeugen Luftdurchlässe 49 für Druckluft aus dem Luftraum 13, welche über das ringförmige Spiel 50 abfließen kann. Somit wird über das Spiel 50 ein radial innerer, zweiter Luftmantel um den aus der Ausströmöffnung 52 austretenden Luft-/Flüssigkeitsgemischstrahl erzeugt, der diesen Strahl bündelt. Über die Durchgangsbohrungen 9' des Luftmantelerzeugers 6' wird ein äußerer Luftmantel gebildet, der um den äußeren Umfang des Düsenkopfes 20' wie bei der Ausführung nach Figur 1 nach vorne strömt, um eine zusätzliche Einfassung des bereits durch den zweiten Luftmantel gebündelten Luft-/Flüssigkeitsstrahles zu bewirken.

In den Figuren 5 bis 7 sind drei Ansichten des Luftmantelerzeugers 6 bzw. 6' in Richtung des Pfeiles VII in Figur 3 gezeigt, wobei die Figuren 5 und 6 Ausführungen mit unterschiedlich gestalteten, am Umfang gleichmäßig verteilten, durchgehenden Längsnuten 9 zeigen, welche den äußeren Luftmantel erzeugen, während die Ausführung nach Figur 7 den schon beschriebenen Kranz 7' mit Durchgangsbohrungen 9' gemäß Figur 3 darstellt.

Die Ausführungen nach den Figuren 8 bis 11 zeigen Varianten des Luftmantelerzeugers 6 nach der ersten Ausführung gemäß den Figuren 1 und 2 in Ansichten des Luftmantelerzeugers in Richtung des Pfeiles XI in Figur 1. Die hier sämtlich mit 7 bezeichneten Abflachungen können danach in unterschiedlicher Anzahl vorgesehen sein, wobei die Ausführung mit vier Abflachungen zum Erzeugen der Luftdurchlässe 9 in Figur 11 dargestellt ist.

## Patentansprüche

1. Minimalmengen-Kühlschmiervorrichtung mit einem Düsenkopf (20, 20'), der eine Mischkammer (22, 22'), in der unter Druck getrennt über einen Luftschlauch (26) und über einen innerhalb des Luftschlauches untergebrachten Kapillarschlauch (14) zugeführte Luft-/Flüssigkeitsströme gemischt werden, und mindestens eine Ausströmöffnung (30; 52) aufweist, über die das Luft-/Flüssigkeitsgemisch in Richtung auf einen Kühlschmierort ausgegeben wird, und mit einem Luftmantelerzeuger (6, 6'), der von einem Träger (2) gehalten ist und das aus der Ausströmöffnung austretende Luft-/Flüssigkeitsgemisch mit einem Luftmantel einhüllt, wobei der Träger (2) über eine Dichtverschraubung (28) an das freie Ende des Luftschlauches (26) angeschlossen ist,
wobei der Kapillarschlauch (14) durch einen Steg (8) des Luftmantelerzeugers (6, 6') zur Strömungsverbindung mit der Mischkammer (22, 22') durchgeführt ist und ein Luftraum (3, 13) mit der Mischkammer (22, 22') über einen Strömungsweg (17, 19; 49, 50, 53) im Düsenkopf (20, 20') in Verbindung steht,
**dadurch gekennzeichnet,**
**daß** zwischen Düsenkopf (20, 20') und Steg (8) des Luftmantelerzeugers (6, 6') eine Dichtungspackung (16, 18) in dem gemeinsamen Luftraum (3, 13) im Träger (2) und im Luftmantelerzeuger (6, 6') axial schwimmend auf dem Kapillarschlauch (14) angeordnet ist und
**daß** die Dichtungspackung (16, 18) zwischen dem Steg (8) und dem inneren Ende des in den Luftmantelerzeuger (6, 6') eingeschraubten Düsenkopfes (20, 20') zur Abdichtung der Kapillarschlauchdurchführung gegen einen Rückstrom von Luft-/Flüssigkeitsgemisch in den Luftraum (3, 13) eingeklemmt ist.

2. Vorrichtung nach Anspruch 1, **dadurch gekennzeichnet, daß** der Luftmantelerzeuger (6, 6') in einer Bohrung (4) des Trägers (2) festsitzt und um seinen Umfang in einem Bereich radial außerhalb des Düsenkörpers (20, 20') verteilte Öffnungen (9, 9') hat, die eine Strömungsverbindung zwischen dem Luftraum (3, 13) und dem Bereich um den äußeren Umfang des Düsenkopfes (20, 20') herstellen.

3. Vorrichtung nach Anspruch 2, **dadurch gekennzeichnet, daß** die Öffnungen einen Kranz von Durchgangsbohrungen (9') im Luftmantelerzeuger (6') umfassen.

4. Vorrichtung nach Anspruch 3, **dadurch gekennzeichnet, daß** die Öffnungen um den äußeren Umfang des Luftmantelerzeugers (6) verteilte Ausnehmungen (9) bilden.

5. Vorrichtung nach Anspruch 4, **dadurch gekennzeichnet, daß** die Ausnehmungen (9) von Abflachungen gebildet sind.

6. Vorrichtung nach Anspruch 4, **dadurch gekennzeichnet, daß** die Ausnehmungen (9) von durchgehenden Nuten im Umfang des Luftmantelerzeugers gebildet sind.

7. Vorrichtung nach einem der Ansprüche 1 bis 6, **dadurch gekennzeichnet, daß** der Steg (8) des Luftmantelerzeugers (6, 6') mindestens einen Durchlaß (10) zur Strömungsverbindung zwischen den Lufträumen (3, 13) im Träger (2) und im Luftmantelerzeuger (6, 6') aufweist.

8. Vorrichtung nach einem der Ansprüche 1 bis 7, **dadurch gekennzeichnet, daß** der Düsenkopf (20') einen Düseneinsatz (40) enthaltend die Mischkammer (22') aufweist, daß der Kapillarschlauch (14) in die Mischkammer (22') hineingeführt ist und daß der Düseneinsatz (40) von einem Düsenmantel (46) mit einem ringförmigen Luftspalt (50) umgeben ist, welcher mit der Mischkammer (22') über eine Öffnung (53) im Düseneinsatz (40) verbunden ist und zur Ausströmseite hin um die Ausströmöffnung (52) herum ausmündet, um einen inneren zweiten Luftmantel um den aus der Ausströmöffnung (52) austretenden Luft-/Flüssigkeitsgemischstrahl zu bilden.

9. Vorrichtung nach einem der Ansprüche 1 bis 7, **dadurch gekennzeichnet, daß** im Düsenkopf (20) in Strömungsrichtung vor der Mischkammer (22) ein Drallerzeuger (24) angeordnet ist, über den der Luftraum (3, 13)mit der Mischkammer (22) in Verbindung steht und dessen innere Stirnfläche zur Anpressung der Dichtungspackung (16, 18) an den Steg (8) des Luftmantelerzeugers (6) dient, und daß der Kapillarschlauch (14) in ein Sackloch (25) im Drallerzeuger (24) endet und über eine Querbohrung (19) mit den Drallflächen (17) in Strömungsverbindung steht.

10. Vorrichtung nach einem der Ansprüche 1 bis 9, **dadurch gekennzeichnet, daß** die Dichtungspackung zwei O-Ringe (16) mit auf dem Umfang des Kapillarschlauches (14) passendem Durchmesser und eine axial dazwischen schwimmend angeordnete ringförmige Scheibe (18) aufweist.

## Claims

1. Device for applying minimal amounts of coolant lubricant, with a nozzle head (20, 20') which has a mixing chamber (22, 22') in which air flows and fluid flows are mixed which have been supplied separately under pressure via an air hose (26) and a capillary hose (14) accommodated within the air hose, and at least one outlet opening (30; 52) via which air/fluid mixture is discharged in the direction towards a coolant lubrication site, and with an air jacket generator (6, 6') which is held by a carrier (2) and encloses the air/fluid mixture emerging from the outlet opening in an air jacket,
wherein the carrier (2) is connected to the free end of the air hose (26) via a screw seal (28),
wherein the capillary hose (14) is led through a web (8) of the air jacket generator (6, 6') to effect a flow connection with the mixing chamber (22, 22'), and an air space (3, 13) is connected to the mixing chamber (22, 22') via a flow path (17, 19; 49, 50, 53) in the nozzle head (20, 20'),
**characterised in that**
between the nozzle head (20, 20') and web (8) of the air jacket generator (6, 6'), a sealing pack (16, 18) is arranged, floating axially on the capillary hose (14), in the common air space (3, 13) in the carrier (2) and in the air jacket generator (6, 6'), and
that the sealing pack (16, 18) is jammed between the web (8) and the inner end of the nozzle head (20, 20') that is screwed into the air jacket generator (6, 6'), to seal the capillary hose conduit against reflux of the air/fluid mixture into the air space (3, 13).

2. Device according to claim 1, **characterised in that** the air jacket generator (6, 6') sits firmly in a hole (4) of the carrier (2) and has openings (9, 9') which are distributed around its periphery, in an area radially outside the nozzle body (20, 20'), and which produce a flow connection between the air space (3, 13) and the area around the outer periphery of the nozzle head (20, 20').

3. Device according to claim 2, **characterised in that** the openings comprise a collar of through-holes (9') in the air jacket generator (6').

4. Device according to claim 3, **characterised in that** the openings form recesses (9) distributed around the outer periphery of the air jacket generator (6).

5. Device according to claim 4, **characterised in that** the recesses (9) are formed by flattened areas.

6. Device according to claim 4, **characterised in that** the recesses (9) are formed by continuous grooves in the periphery of the air jacket generator.

7. Device according to one of the claims 1 to 6, **characterised in that** the web (8) of the air jacket generator (6, 6') has at least one passage (10) for a flow connection between the air spaces (3, 13) in the carrier (2) and in the air jacket generator (6, 6').

8. Device according to one of the claims 1 to 7, **characterised in that** the nozzle head (20') has a nozzle insert (40) containing the mixing chamber (22'), that the capillary hose (14) is led into the mixing chamber (22'), and that the nozzle insert (40) is surrounded by a nozzle jacket (46) with a ring-shaped air gap (50) which is connected to the mixing chamber (22') via an opening (53) in the nozzle insert (40) and which opens towards the discharge side around the discharge opening (52), in order to form an inner, second air jacket around the jet of air/fluid mixture emerging from the discharge opening (52).

9. Device according to one of the claims 1 to 7, **characterised in that** arranged in the nozzle head (20), before the mixing chamber (22) in the direction of flow, is a twist generator (24), via which the air space (3, 13) is connected to the mixing chamber (22) and whose inner frontal face serves to press the sealing pack (16, 18) against the web (8) of the air jacket generator (6), and that the capillary hose (14) ends in a blind hole (25) in the twist generator (24) and is in flow connection with the twist areas (17) via a cross hole (19).

10. Device according to one of the claims 1 to 9, **characterised in that** the sealing pack has two O-rings (16) with a diameter matched to the circumference of the capillary hose (14), and a ring-shaped disk (18) arranged floating axially between them.

## Revendications

1. Dispositif pour refroidissement/lubrification minimale avec une tête de pulvérisation (20, 20'), qui présente une chambre de mélange (22, 22'), dans laquelle sont mélangés des flux d'air et de liquide sous pression, introduits séparément via un flexible à air (26) et via un flexible capillaire (14) logé à l'intérieur du flexible à air, et au moins une ouverture de sortie (30; 52), via laquelle le mélange air/liquide est envoyé en direction d'un lieu de refroidissement/lubrification, et un générateur d'enveloppe d'air (6, 6'), qui est maintenu par un support (2) et qui entoure le mélange air/liquide sortant de l'ouverture de sortie d'une enveloppe d'air, le support (2) étant raccordé via un raccord vissé d'étanchéité (28) à l'extrémité libre du flexible à air (26),
le flexible capillaire (14) étant guidé à travers une nervure (8) du générateur d'enveloppe d'air (6, 6') pour la liaison d'écoulement avec la chambre de mélange (22, 22') et un volume d'air (3, 13) étant en liaison avec la chambre de mélange (22, 22') via un chemin d'écoulement (17, 19; 49, 50, 53) dans la tête de pulvérisation (20, 20'),
**caractérisé en ce que**,
entre la tête de pulvérisation (20, 20') et la nervure (8) du générateur d'enveloppe d'air (6, 6') est disposé un bourrage d'étanchéité (16, 18) dans le volume d'air commun (3, 13) dans le support (2) et en flottement axial sur le flexible capillaire (14) dans le générateur d'enveloppe d'air (6, 6') et
**en ce que** le bourrage d'étanchéité (16, 18) est serré entre la nervure (8) et l'extrémité intérieure de la tête de pulvérisation (20, 20') vissée dans le générateur d'enveloppe d'air (6, 6') pour étancher le passage du flexible capillaire contre un flux en retour du mélange air/liquide dans le volume d'air (3, 13).

2. Dispositif suivant la revendication 1, **caractérisé en ce que** le générateur d'enveloppe d'air (6, 6') est calé dans un alésage (4) du support (2) et possède des ouvertures (9, 9') réparties radialement dans une zone à sa périphérie à l'extérieur du corps de buse (20, 20'), qui établissent une liaison d'écoulement entre le volume d'air (3, 13) et la zone autour de la périphérie extérieure de la tête de pulvérisation (20, 20').

3. Dispositif suivant la revendication 2, **caractérisé en ce que** les ouvertures forment une couronne de trous de passage (9') dans le générateur d'enveloppe d'air (6').

4. Dispositif suivant la revendication 3, **caractérisé en ce que** les ouvertures forment des renfoncements (9) répartis à la périphérie extérieure du générateur d'enveloppe d'air (6).

5. Dispositif suivant la revendication 4, **caractérisé en ce que** les renfoncements (9) sont formés comme méplats.

6. Dispositif suivant la revendication 4, **caractérisé en ce que** les renfoncements (9) sont formés comme rainures continues à la périphérie du générateur d'enveloppe d'air.

7. Dispositif suivant l'une des revendications 1 à 6, **caractérisé en ce que** la nervure (8) du générateur d'enveloppe d'air (6, 6') présente au moins un passage (10) de liaison d'écoulement entre les volumes d'air (3, 13) dans le support (2) et dans le générateur d'enveloppe d'air (6, 6').

8. Dispositif suivant l'une des revendications 1 à 7, **caractérisé en ce que** la tête de pulvérisation (20') présente une garniture de buse (40) contenant la chambre de mélange (22'), **en ce que** le flexible capillaire (14) est introduit dans la chambre de mélange (22') et **en ce que** la garniture de buse (40) est entourée d'une enveloppe de buse (46) avec une fente d'air annulaire (50), qui est reliée à la chambre de mélange (22') via une ouverture (53) dans la garniture de buse (40) et débouche du côté de la sortie autour de l'ouverture de sortie (52), afin de former une deuxième enveloppe d'air intérieure autour du jet de mélange air/liquide sortant de l'ouverture de sortie (52).

9. Dispositif suivant l'une des revendications 1 à 7, **caractérisé en ce qu'**un générateur de tourbillons (24) est disposé dans la direction d'écoulement dans la tête de pulvérisation (20) devant la chambre de mélange (22), via lequel le volume d'air (3, 13) est en liaison avec la chambre de mélange (22) et dont la surface frontale intérieure sert à presser le bourrage d'étanchéité (16, 18) contre la nervure (8) du générateur d'enveloppe d'air (6) et **en ce que** le flexible capillaire (14) se termine dans un trou borgne (25) dans le générateur de tourbillons (24) et est en liaison d'écoulement avec les surfaces de tourbillonnement (17) via un perçage transversal (19).

10. Dispositif suivant l'une des revendications 1 à 9, **caractérisé en ce que** le bourrage d'étanchéité présente deux joints toriques (16) d'un diamètre adapté à la périphérie du flexible capillaire (14) et un disque annulaire (18) disposé à flottement axial entre ceux-ci.
